# EUROPÄISCHE PATENTSCHRIFT

(11) **EP 4 412 849 B1**
(45) Veröffentlichungstag und Bekanntmachung des Hinweises auf die Patenterteilung: **04.12.2024**
(21) Anmeldenummer: 22840151.9
(22) Anmeldetag: 19.12.2022
(51) Int. Cl.: B60K 1/00, B60K 1/02, B60K 17/02, B60K 7/00, B60K 17/04, B60K 17/26, B60K 23/04

(54) **ANTRIEBSEINRICHTUNG FÜR EINEN KRAFTWAGEN, INSBESONDERE FÜR EINEN PERSONENKRAFTWAGEN**
PROPULSION UNIT FOR A MOTOR VEHICLE, IN PARTICULAR FOR A PASSENGER CAR
DISPOSITIF DE PROPULSION POUR UN VÉHICULE AUTOMOBILE, NOTAMMENT POUR UNE VOITURE

(30) Priorität: 03.01.2022 DE 102022000018
(43) Veröffentlichungstag der Anmeldung: 14.08.2024
(73) Patentinhaber: Mercedes-Benz Group AG, 70372 Stuttgart (DE)
(72) Erfinder: OGRIZOVIC, Goran, 72622 Nürtingen (DE)
(74) Vertreter: Novagraaf Group
(86) Internationale Anmeldenummer: PCT/EP2022/086745
(87) Internationale Veröffentlichungsnummer: WO 2023/126237

(56) Entgegenhaltungen:
- CN-A- 113 085 518
- DE-A1- 102019 115 918
- US-A1- 2015 107 914

## Beschreibung

Die Erfindung betrifft eine Antriebseinrichtung für einen Kraftwagen, insbesondere für einen Personenkraftwagen.

Eine Antriebseinrichtung für ein Kraftfahrzeug unter Verwendung von Axialflussmaschinen ist aus der CN 113 085 518 A bekannt.

Der DE 10 2015 000 466 B4 ist eine Antriebsvorrichtung für ein Kraftfahrzeug als bekannt zu entnehmen. Außerdem offenbart die WO 2018/150010 A1 eine Achsantriebseinheit für ein elektrisch antreibbares Kraftfahrzeug.

Aufgabe der vorliegenden Erfindung ist es, eine Antriebseinrichtung für einen Kraftwagen zu schaffen, sodass ein besonders vorteilhafter Antrieb des Kraftwagens realisiert werden kann.

Diese Aufgabe wird durch eine Antriebseinrichtung mit den Merkmalen des Patentanspruchs 1 gelöst. Vorteilhafte Ausgestaltungen mit zweckmäßigen Weiterbildungen der Erfindung sind in den übrigen Ansprüchen angegeben.

Die Erfindung betrifft eine auch als Achsantrieb bezeichnete Antriebseinrichtung für einen Kraftwagen, insbesondere für einen Personenkraftwagen. Dies bedeutet, dass der Kraftwagen in seinem vollständig hergestellten Zustand die Antriebseinrichtung aufweist und mittels der Antriebseinrichtung, insbesondere rein elektrisch, angetrieben werden kann. Insbesondere weist der Kraftwagen wenigstens eine einfach auch als Achse bezeichnete Fahrzeugachse auf, welche wenigstens oder genau zwei einfach auch als Räder bezeichnete Fahrzeugräder aufweist. Wie im Folgenden noch genauer erläutert wird, sind die Fahrzeugräder mittels der Antriebseinrichtung, insbesondere rein elektrisch, antreibbar, wodurch der Kraftwagen, insbesondere rein elektrisch, antreibbar ist. Insbesondere sind die Fahrzeugräder auf in Fahrzeugquerrichtung einander gegenüberliegenden Seiten des auch als Fahrzeug bezeichneten Kraftwagens angeordnet.

Die Antriebseinrichtung weist eine erste Abtriebswelle auf, von welcher oder über welche ein erstes der Fahrzeugräder der Fahrzeugachse antreibbar ist. Hierzu ist beispielsweise das erste Fahrzeugrad drehmomentübertragend mit der ersten Abtriebswelle gekoppelt oder koppelbar. Die Antriebseinrichtung weist eine koaxial zur ersten Abtriebswelle angeordnete, zweite Abtriebswelle auf, von welcher oder über welche das zweite Fahrzeugrad der Fahrzeugachse des Kraftwagens antreibbar ist. Hierzu ist beispielsweise das zweite Fahrzeugrad mit der zweiten Abtriebswelle drehmomentübertragend gekoppelt oder koppelbar. Die Antriebseinrichtung umfasst außerdem ein Differentialgetriebe, über welches die Abtriebswellen antreibbar sind. Mit anderen Worten sind die Abtriebswellen von dem Differentialgetriebe antreibbar. Das Differentialgetriebe ist beispielsweise als Kegeldifferential ausgebildet, welches auch als Kegelraddifferential bezeichnet wird. Selbstverständlich ist es denkbar, dass das Differentialgetriebe als eine andere Art von Differentialgetriebe ausgebildet ist. Wie aus dem allgemeinen Stand der Technik bereits hinlänglich bekannt ist, ist das Differentialgetriebe insbesondere dazu ausgebildet, beispielsweise bei einer Kurvenfahrt des Kraftwagens unterschiedliche Drehzahlen der Abtriebswellen und somit der Fahrzeugräder zuzulassen, insbesondere derart, dass sich das kurvenäußere Fahrzeugrad mit einer höheren Drehzahl dreht oder drehen kann als das kurveninnere Fahrzeugrad, insbesondere während die Fahrzeugräder mittels der Antriebseinrichtung antreibbar sind oder angetrieben werden. Die Antriebseinrichtung weist außerdem drei koaxial zueinander und koaxial zu den Abtriebswellen angeordnete Axialflussmaschine auf, nämlich eine erste Axialflussmaschine, eine zweite Axialflussmaschine und eine dritte Axialflussmaschine. Die jeweilige Axialflussmaschine weist einen jeweiligen Stator und jeweils wenigstens oder genau zwei Rotoren auf, die mittels des jeweiligen Stators antreibbar und dadurch um eine jeweilige Maschinendrehachse relativ zu dem jeweiligen Stator drehbar sind. Dabei ist der jeweilige Rotor der jeweiligen Axialflussmaschine in axialer Richtung der jeweiligen Axialflussmaschine zwischen den jeweiligen Rotoren der jeweiligen Axialflussmaschine angeordnet, wobei die jeweilige axiale Richtung der jeweiligen Axialflussmaschine mit der jeweiligen Maschinendrehachse zusammenfällt. Insbesondere sind die Axialflussmaschinen in axialer Richtung der jeweiligen Axialflussmaschine, insbesondere vollständig, aufeinanderfolgend und somit hintereinander angeordnet. Die Rotoren der ersten Axialflussmaschine sind drehfest miteinander verbunden und bilden dadurch einen ersten Gesamtrotor. Die Rotoren der zweiten Axialflussmaschine sind drehfest miteinander verbunden und bilden dadurch einen zweiten Gesamtrotor. Die Rotoren der dritten Axialflussmaschine sind drehfest miteinander verbunden und bilden dadurch einen dritten Gesamtrotor.

Mittels der ersten Axialflussmaschine, insbesondere mittels des Gesamtrotors der ersten Axialflussmaschine, ist die erste Abtriebswelle unter Umgehung des Differentialgetriebes antreibbar. Dies bedeutet, dass bezogen auf einen ersten Drehmomentenfluss, über welchen ein jeweiliges, erstes Drehmoment von dem Gesamtrotor der ersten Axialflussmaschine auf die erste Abtriebswelle übertragbar ist, um dadurch die erste Abtriebswelle anzutreiben, das Differentialgetriebe nicht in dem ersten Drehmomentenfluss oder zumindest nicht in dem ersten Drehmomentenfluss zwischen dem Gesamtrotor der ersten Axialflussmaschine und der ersten Abtriebswelle angeordnet ist, sodass das jeweilige, erste Drehmoment auf seinem Weg von dem Gesamtrotor der ersten Axialflussmaschine zu der oder auf die erste Abtriebswelle entlang des Drehmomentenflusses nicht über das Differentialgetriebe fließt, mithin das Differentialgetriebe umgeht. Mittels der zweiten Axialflussmaschine, insbesondere mittels des Gesamtrotors der zweiten Axialflussmaschine, ist die zweite Abtriebswelle unter Umgehung des Differentialgetriebes antreibbar. Dies bedeutet, dass bezogen auf einen zweiten Drehmomentenfluss, über welchen ein jeweiliges, zweites Drehmoment von dem Gesamtrotor der zweiten Axialflussmaschine zu der oder auf die zweite Abtriebswelle übertragbar ist, das Differentialgetriebe nicht in dem zweiten Drehmomentenfluss oder jedenfalls nicht in dem zweiten Drehmomentenfluss zwischen dem Gesamtrotor der zweiten Axialflussmaschine und der zweiten Abtriebswelle angeordnet ist. Somit fließt das jeweilige, zweite Antriebsdrehmoment auf seinem Weg von dem Gesamtrotor der zweiten Axialflussmaschine zu der oder auf die zweite Abtriebswelle entlang des Drehmomentenflusses nicht über das Differentialgetriebe fließt, mithin das Differentialgetriebe umgeht. Wieder mit anderen Worten ausgedrückt, die erste beziehungsweise zweite Axialflussmaschine kann über ihren Gesamtrotor das jeweilige, erste beziehungsweise zweite Drehmoment bereitstellen, um dadurch die erste beziehungsweise zweite Abtriebswelle anzutreiben. Das jeweilige, erste beziehungsweise zweite Drehmoment wird dabei über den ersten beziehungsweise zweiten Drehmomentenfluss von dem Gesamtrotor der ersten beziehungsweise zweiten Axialflussmaschine auf die beziehungsweise zu der ersten beziehungsweise zweiten Abtriebswelle übertragen, wobei das jeweilige, erste beziehungsweise zweite Drehmoment dann, wenn es entlang des ersten beziehungsweise zweiten Drehmomentenflusses von dem Gesamtrotor der ersten beziehungsweise zweiten Axialflussmaschine zu der beziehungsweise auf die erste beziehungsweise zweite Abtriebswelle geflossen ist und somit die erste beziehungsweise zweite Abtriebswelle erreicht hat, nicht über das Differentialgetriebe von dem Gesamtrotor der ersten beziehungsweise zweiten Axialflussmaschine auf die beziehungsweise zu der ersten beziehungsweise zweiten Abtriebswelle geflossen ist.

Mittels der dritten Axialflussmaschine, insbesondere mittels des Gesamtrotors der dritten Axialflussmaschine, sind die Abtriebswellen über das Differentialgetriebe antreibbar. Dies bedeutet, dass die dritte Axialflussmaschine über ihren Gesamtrotor ein jeweiliges, drittes Drehmoment zum Antreiben der jeweiligen Abtriebswelle bereitstellen kann. Bezogen auf einen dritten Drehmomentenfluss, über welchen das jeweilige, dritte Drehmoment von dem Gesamtrotor der dritten Axialflussmaschine auf die jeweilige Abtriebswelle übertragbar ist, ist das Differentialgetriebe in dem dritten Drehmomentenfluss und dabei stromauf der jeweiligen Abtriebswelle und stromab des Gesamtrotors der dritten Axialflussmaschine angeordnet, sodass das jeweilige, dritte Drehmoment auf seinem Weg von dem Gesamtrotor der dritten Axialflussmaschine zu der beziehungsweise auf die jeweilige Abtriebswelle über das Differentialgetriebe von dem Gesamtrotor der dritten Axialflussmaschine auf die beziehungsweise zu der jeweiligen Abtriebswelle fließt. Hierzu ist es beispielsweise vorgesehen, dass der Gesamtrotor der dritten Axialflussmaschine mit einem Eingangselement des Differentialgetriebes, insbesondere drehfest, verbunden ist, wobei beispielsweise das Eingangselement des Differentialgetriebes, welches einfach auch als Differential bezeichnet wird, ein Differentialkorb ist.

In vorteilhafter Ausgestaltung der Erfindung ist ein erster Freilauf, über welchen die erste Abtriebswelle von der ersten Axialflussmaschine unter Umgehung des Differentialgetriebes antreibbar ist, vorgesehen. Vorgesehen ist auch ein zweiter Freilauf, über welchen die zweite Abtriebswelle von der zweiten Axialflussmaschine unter Umgehung des Differentialgetriebes antreibbar ist.

In vorteilhafter Ausgestaltung der Erfindung ist ein erstes, reibschlüssiges oder formschlüssiges Schaltelement vorgesehen, mittels welchem die erste Abtriebswelle von der ersten Axialflussmaschine unter Umgehung des Differentialgetriebes antreibbar ist. Vorgesehen ist auch ein zweites, reibschlüssiges oder formschlüssiges Schaltelement, mittels welchem die zweite Abtriebswelle von der zweiten Axialflussmaschine unter Umgehung des Differentialgetriebes antreibbar ist.

Der Erfindung liegen insbesondere die folgenden Erkenntnisse und Überlegungen zugrunde: Die Antriebseinrichtung gemäß der Erfindung geht aus von einer sogenannten Dual-Motor-Antriebseinheit, da pro Abtriebswelle und somit pro Abtriebswellenseite eine jeweilige, elektrische Maschine vorliegend in Form der ersten elektrischen Maschine beziehungsweise der zweiten elektrischen Maschine vorgesehen ist. Hierdurch kann eine besonders vorteilhafte Fahrdynamik realisiert werden, da insbesondere eine auch als Torque-Vectoring bezeichnete Drehmomentenverteilung und andere Fahrdynamikeingriffe realisiert werden können. Ausgehend von dieser Dual-Motor-Antriebseinheit wird die Dual-Motor-Antriebseinheit um eine dritte elektrische Maschine ergänzt, wobei sämtlicheelektrische Maschinen als Axialflussmaschinen ausgebildet sind, wodurch insbesondere ein besonders vorteilhafter, auch als Boost-Betrieb oder Boost-Modus bezeichneter Unterstützungsbetrieb realisiert werden kann, wobei durch die Ausbildung der elektrischen Maschinen als Axialflussmaschinen der benötigte axiale Bauraum gering gehalten werden kann. Fahrzeuge, die mit einer Dual-Motor-Antriebseinheit ausgestaltet werden, sind in der Regel Fahrzeuge mit einer hohen Leistung. Diese hohe Leistung wird durch leistungsstarke, elektrische Maschinen zur Verfügung gestellt, welche jedoch üblicherweise nicht optimal auf einen normalen Fahrzyklus ausgelegt werden können, in welchem keine hohen Leistungen abgerufen werden. Kleinere elektrische Maschinen sind in herkömmlichen Alltags-Fahrzyklen in der Regel effizienter. Ziel ist es dabei, im Fahrzeug die Funktionalität einer Dual-Motor-Antriebseinheit darzustellen, jedoch möglichst ohne Effizienznachteile. Insbesondere bei einer Axialflussmaschine wirkt sich die radiale Skalierung zur Leistungs-Drehmomentsteigerung negativ auf die zulässige maximale Drehzahl aus. Da der radiale Bauraum für elektrische Maschinen in der Regel begrenzt ist und somit auch die Leistung beziehungsweise das Drehmoment pro elektrischer Maschine, ermöglicht die dritte elektrische Maschine eine vorteilhafte Leistungsskalierung. Abhängig von der radialen Dimensionierung des jeweiligen Gesamtrotors der jeweiligen Axialflussmaschine können sich Drehzahlgrenzen ergeben. Kleinere Rotordimensionen ermöglichen höhere Drehzahlen. Durch entsprechende Motordimensionierung können die beiden an die Abtriebswellen angebundenen, elektrischen Maschinen schneller drehen als die als Boost-Elektromaschine verwendete, dritte Axialflussmaschine, und somit kann eine höhere Höchstgeschwindigkeit des Kraftwagens erreicht werden. Die auch als Leistungs-Elektromaschine bezeichnete, dritte Axialflussmaschine könnte somit ab einer bestimmten Geschwindigkeit abgekoppelt werden. Mit anderen Worten wird ausgehend von einer Dual-Motor-Antriebseinheit die dritte Axialflussmaschine als Boost- beziehungsweise Leistungs-Elektromotor oder - Elektromaschine verwendet, die an das Differentialgetriebe angebunden ist, aus welchem die Abtriebswellen insbesondere als Differentialwellen rausführen, auf die die erste Axialflussmaschine und die zweite Axialflussmaschine wirken können. Insbesondere ist es denkbar, dass die erste beziehungsweise zweite Axialflussmaschine über ein jeweiliges Übertragungselement, wie einen Freilauf, oder über ein aktuiertes oder aktuierbares Schaltelement, wie beispielsweise eine Reibkupplung, oder eine Klauenkupplung, zugeschaltet werden beziehungsweise auf die jeweilige Abtriebswelle wirken kann, insbesondere unter Umgehung des Differentialgetriebes.

Die Erfindung ermöglicht einen besonders effizienten Betrieb mit einer besonders hohen Leistungsdichte, da die drei Axialflussmaschinen koaxial angeordnet werden können. Insbesondere ist dadurch eine vorteilhafte Skalierbarkeit darstellbar. Es können Rotoren von Axialflussmaschinen mit geringeren Durchmessern verwendet werden, was eine höhere maximale Drehzahl ermöglicht, womit auch eingängige Getriebe mit hoher Höchstgeschwindigkeit besser dargestellt werden können.

Weitere Vorteile, Merkmale und Einzelheiten der Erfindung ergeben sich aus der nachfolgenden Beschreibung bevorzugter Ausführungsbeispiele sowie anhand der Zeichnung.

Die Zeichnung zeigt in:
- Fig. 1: eine schematische Darstellung einer ersten Ausführungsform einer Antriebseinrichtung für einen Kraftwagen, insbesondere für einen Personenkraftwagen; und
- Fig. 2: eine schematische Darstellung einer zweiten Ausführungsform der Antriebseinrichtung.

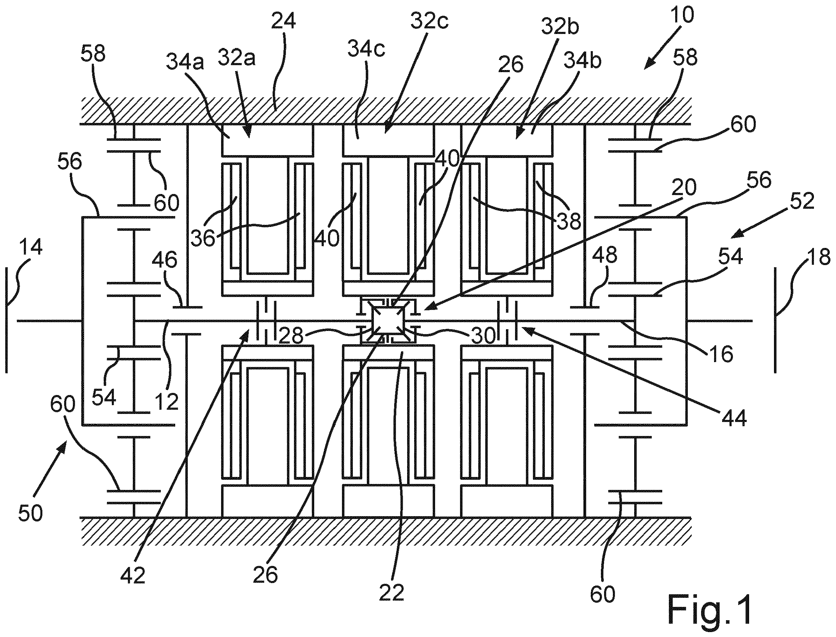

Fig. 1 zeigt in einer schematischen Darstellung eine erste Ausführungsform einer Antriebseinrichtung 10 für einen Kraftwagen, insbesondere für einen Personenkraftwagen. Der Kraftwagen wird auch als Kraftfahrzeug oder Fahrzeug bezeichnet und weist beispielsweise wenigstens oder genau zwei in Fahrzeuglängsrichtung aufeinanderfolgend angeordnete, einfach auch als Achsen bezeichnete Fahrzeugachsen auf. Die jeweilige Fahrzeugachse weist wenigstens oder genau zwei Fahrzeugräder auf, wobei die jeweiligen Fahrzeugräder der jeweiligen Fahrzeugachse auf in Fahrzeugquerrichtung einander gegenüberliegenden Seiten des Kraftfahrzeugs angeordnet sind. Wie im Folgenden noch genauer erläutert wird, sind mittels der Antriebseinrichtung 10 die Fahrzeugräder einer der Fahrzeugachsen, insbesondere rein elektrisch, antreibbar. Wenn im Folgenden die Rede von den Fahrzeugrädern ist, sind darunter, falls nichts Anderes angegeben ist, die mittels der Antriebseinrichtung 10 antreibbaren Fahrzeugräder der einen Fahrzeugachse zu verstehen. Die Antriebseinrichtung 10 weist eine erste Abtriebswelle 12 auf, über welche ein in Fig. 1 mit 14 bezeichnetes, erstes der Fahrzeugräder antreibbar ist. Des Weiteren weist die Antriebseinrichtung 10 eine zweite Abtriebswelle 16 auf, über welche das in Fig. 1 mit 18 bezeichnete, zweite Fahrzeugrad antreibbar ist. Des Weiteren weist die Antriebseinrichtung 10 ein Differentialgetriebe 20 auf, welches bei der ersten Ausführungsform als ein Kegelraddifferential ausgebildet ist und dabei einen Differentialkorb 22 als Eingangselement aufweist. Die Abtriebswellen 12 und 16 sind koaxial zueinander angeordnet und um eine gemeinsame Abtriebswellendrehachse relativ zu einem Gehäuse 24 der Antriebseinrichtung 10 drehbar. Dabei ist das Differentialgetriebe 20, welches einfach auch als Differential bezeichnet wird, koaxial zu den Abtriebswellen 12 und 16 angeordnet und somit um die Abtriebswellendrehachse relativ zu dem Gehäuse 24 drehbar. Dabei ist insbesondere der Differentialkorb 22 um die Abtriebswellendrehachse relativ zu dem Gehäuse 24 drehbar. An dem Differentialkorb 22 sind Ausgleichsräder 26 angeordnet, welche um eine gemeinsame Ausgleichsraddrehachse relativ zu dem Differentialkorb 22 und auch beispielsweise relativ zueinander drehbar sind. Die Ausgleichsraddrehachse verläuft dabei senkrecht zur Abtriebswellendrehachse. Bei der ersten Ausführungsform ist das jeweilige Ausgleichsrad 26 als ein Zahnrad und dabei insbesondere als ein Kegelrad ausgebildet. Mit der Abtriebswelle 12 ist ein erstes Abtriebsrad 28 des Differentials drehfest verbunden, und mit der Abtriebswelle 16 ist ein zweites Abtriebsrad 30 des Differentialgetriebes 20 drehfest verbunden. Die Abtriebsräder 28 und 30 sind Zahnräder, insbesondere Kegelräder, wobei das jeweilige Abtriebsrad 28, 30 mit den Ausgleichsrädern 26 kämmt. Somit sind die Abtriebsräder 28 und 30 mit den Abtriebswellen 12 und 16 um die Abtriebswellendrehachse relativ zu dem Gehäuse 24 mitdrehbar.

Die Antriebseinrichtung 10 weist des Weiteren drei koaxial zueinander und koaxial zu den Abtriebswellen 12 und 16 und koaxial zu dem Differentialgetriebe 20 angeordnete Axialflussmaschinen 32a-b auf. Dabei wird die Axialflussmaschine 32a als erste Axialflussmaschine, die Axialflussmaschine 32b als zweite Axialflussmaschine und die Axialflussmaschine 32c als dritte Axialflussmaschine bezeichnet. Es ist erkennbar, dass die dritte Axialflussmaschine 32c in axialer Richtung der Axialflussmaschinen 32a-c zwischen den Axialflussmaschinen 32a und 32b angeordnet ist. Die jeweilige Axialflussmaschine 32a-c weist einen jeweiligen Stator 34a-c auf, welcher drehfest mit dem Gehäuse 24 verbunden ist. Des Weiteren weist die jeweilige Axialflussmaschine 32a-c jeweils zwei Rotoren 36, 38 beziehungsweise 40 auf. Dabei ist der Stator 34a in axialer Richtung der Axialflussmaschine 32a zwischen den Rotoren 36 der Axialflussmaschine 32a angeordnet. Dementsprechend ist der Rotor 34b der Axialflussmaschine 32b in axialer Richtung der Axialflussmaschine 32b zwischen den Rotoren 38 der Axialflussmaschine 32b angeordnet. Demzufolge ist der Rotor 34c der Axialflussmaschine 32c in axialer Richtung der Axialflussmaschine 32c zwischen den Rotoren 40 der Axialflussmaschine 32c angeordnet.

Die Rotoren 40 sind drehfest mit dem Differentialkorb 22 verbunden, sodass das Differentialgetriebe 20 von den Rotoren 40 antreibbar ist. In der Folge sind die Abtriebswellen 12 und 16 über das Differentialgetriebe 20 von den Rotoren 40 und somit von der Axialflussmaschine 32c antreibbar. Durch Antreiben der Abtriebswellen 12 und 16 werden die Fahrzeugräder 14 und 18 angetrieben. Die Abtriebswelle 12 ist von den Rotoren 36 und somit von der Axialflussmaschine 32a unter Umgehung des Differentialgetriebes 20 antreibbar, und die Abtriebswelle 16 ist von den Rotoren 38 und somit von der Axialflussmaschine 32b unter Umgehung des Differentialgetriebes 20 antreibbar. Dabei weist die Antriebseinrichtung 10 ein der Abtriebswelle 12 und den Rotoren 36 zugeordnetes, erstes Übertragungselement 42 und ein der Abtriebswelle 16 und den Rotoren 38 zugeordnetes, zweites Übertragungselement 44 auf. Die Abtriebswelle 12 ist über das Übertragungselement 42 von den Rotoren 36 unter Umgehung des Differentials antreibbar, und die Abtriebswelle 16 ist über das Übertragungselement 44 von den Rotoren 38 unter Umgehung des Differentialgetriebes 20 antreibbar. Beispielsweise ist das Übertragungselement 42, 44 als ein Freilauf ausgebildet. Ferner ist es denkbar, dass das jeweilige Übertragungselement 42, 44 als ein insbesondere aktuierbares Schaltelement ausgebildet ist, welches beispielsweise als ein reibschlüssiges Schaltelement wie beispielsweise eine Reibkupplung, insbesondere eine Lamellenkupplung, oder aber ein formschlüssiges Schaltelement wie beispielsweise eine Klauenkupplung sein kann. Ein jeweiliges Lager der jeweiligen Abtriebswelle 12, 16 ist in Fig. 1 mit 46 beziehungsweise 48 bezeichnet.

Außerdem ist aus Fig. 1 erkennbar, dass der jeweiligen Abtriebswelle 12, 16 ein jeweiliger Planetenradsatz 50, 52 zugeordnet ist. Der jeweilige Planetenradsatz 50, 52 weist ein jeweiliges Sonnenrad 54, einen jeweiligen Planetenträger 56 sowie ein jeweiliges Hohlrad 58 auf. Beispielsweise ist das Hohlrad 58 drehfest mit dem Gehäuse 24 verbunden. Des Weiteren weist der jeweilige Planetenradsatz 50, 52 jeweilige Planetenräder 60 auf, welche drehbar an dem jeweiligen Planetenträger 56 des jeweiligen Planetenradsatzes 50, 52 gelagert sind. Das jeweilige Sonnenrad 54 ist drehfest mit der jeweiligen Abtriebswelle 12, 16 verbunden. Außerdem ist das jeweilige Fahrzeugrad 14, 18 drehmomentübertragend mit dem jeweiligen Planetenträger 56 verbunden.

Die zwischen den Axialflussmaschinen 32a und 32b angeordnete Axialflussmaschine 32c ist eine zentrale elektrische Maschine, welche auch als Hauptmotor oder Effizienzmotor bezeichnet wird und an das Differential angebunden ist. Beispielsweise sind die Axialflussmaschinen 32a und 32b sogenannte Boost-Motoren. Die als Differentialwellen ausgebildeten Abtriebswellen 12 und 16 führen aus dem Differentialgetriebe 20 heraus zu Getrieben, die vorliegend als die Planetenradsätze 50 und 52 ausgebildet sind. Es ist erkennbar, dass die Abtriebswellen 12 und 16 die Rotoren 36 und 38 beziehungsweise jeweilige Rotorwellen der Rotoren 36 und 38 sowie jeweilige Nabenbereiche der Axialflussmaschinen 32a und 32b durchdringen. Der jeweilige, pro Seite vorgesehene Boost-Motor 32a beziehungsweise 32b ist beispielsweise jeweils über ein als Freilauf oder ein Schaltelement ausgebildetes Übertragungselement 42, 44 mit der jeweiligen Differentialwelle koppelbar oder gekoppelt. Im jeweiligen Nabenbereich des jeweiligen Boost-Motors 32 a, b kann ein jeweiliger Freilauf integriert sein. Die Freiläufe befinden sich beispielsweise entweder in der Nabenbohrung, wie es dargestellt ist, oder greifen an einem Wellenabschnitt außen an der Nabe an. Diese Freiläufe haben beispielsweise eine fliehkraftaktivierte Klemmstückanlage. Eine hydrodynamische Klemmstückabhebung ist auch denkbar. Bei Nulldrehzahl oder niedriger Absolutdrehzahl des jeweiligen Boost-Motors, welcher auch als Boost-Elektromaschine bezeichnet wird, liegen die Freilaufklemmstücke nicht an der Welle oder Nabenbohrung an. Dies reduziert die Reibung und den Verschleiß der Klemmkörper. Ab einer bestimmten Drehzahl liegen die Klemmkörper an und können ihre Sperrwirkung entfalten. Die Sperrwirkung tritt auf, sobald die Drehzahl des jeweiligen Boost-Motors die Drehzahl der Differentialwellen erreicht oder überholt. Erst wenn beide Seiten mit dem jeweiligen Freilauf im gesperrten Zustand sind, kann ein auf beide Seiten gleichmäßig verteiltes Drehmoment der Boost-Motoren übertragen werden. Die Sperrung der Freiläufe kann auch selektiv erfolgen, falls ein Drehmomenteneingriff auf nur einer Seite erwünscht ist. Ein derartiger Freilauf wäre als Übertragungselement 42 beziehungsweise 44 denkbar. Alternativ zu Freiläufen können als Übertragungselemente 42, 44 jeweils ein schaltbares, das heißt aktuierbares, Schaltelement, beispielsweise in Form einer Reibkupplung oder einer Klauenkupplung, verwendet werden. Die Boost-Motoren 32 a, b geben das jeweilig Drehmoment nur in einer Richtung und beispielsweise bei einer Vorwärtsfahrt ab, falls nur Freiläufe als Übertragungselemente 42, 44 zum Einsatz kommen. Falls Schaltelemente als Übertragungselemente 42, 44 verwendet werden, kann der jeweilige Boost-Motor 32 a, b auch rückwärts betrieben werden. Bei einer Verwendung von Freiläufen als Übertragungselemente 42, 44 kann insbesondere Folgendes vorgesehen sein: Die beiden beispielsweise als Boost-Motoren ausgebildeten Axialflussmaschinen 32a und 32b können unabhängig voneinander Vortriebsmomente generieren, insbesondere bei einer Vorwärtsfahrt. Bei zugeschalteten Boost-Motoren 32 a, b wird die Drehmomentenverteilung zwischen beiden Rädern 14, 18 über diese beiden Boost-Motoren 32 a, b geregelt. Bei einer Verwendung von Schaltelementen kann gelten: Die beiden Boost-Motoren 32 a, b können unabhängig voneinander Vortriebsmomente oder Bremsmomente generieren, insbesondere bei einer Vorwärts- und Rückwärtsfahrt. Bei zugeschalteten Boost-Motoren 32 a, b wird die Drehmomentenverteilung zwischen beiden Rädern 14, 18 über diese beiden Boost-Motoren 32 a, b geregelt. Allgemein verhält es sich so, dass abhängig von einer radialen Dimensionierung des Rotors und des Rotor-Designs eines Axialflussmaschinenrotors sich Drehzahlgrenzen ergeben, kleinere Rotordimensionen ermöglichen höhere Drehzahlen. Die Boost-Motoren 32 a, b werden somit vorteilhaft ab einer bestimmten Geschwindigkeit abgekoppelt. Die Höchstgeschwindigkeit entsprechend der gesamten installierten Elektromaschinenleistung der drei Axialflussmaschinen 32 a - c an dieser Achse würde im Falle einer Nichtabkopplung nicht erreicht werden können und die Vorderachse des Fahrzeugs müsste gegebenenfalls die notwendige Leistung für die Höchstgeschwindigkeit zusteuern. Ziel der vorliegenden Erfindung ist es, ein effizientes elektrisches Antriebssystem für moderate Fahranforderungen zu entwickeln, das für diese Anforderungen nicht überdimensioniert ist. Es kann eine effizienzoptimierte Elektromaschinen 32 c eingesetzt werden, welche in der Regel auch eine geringere Leistung und ein geringeres maximales Drehmoment hat. Die Boost-Motoren 32 a, b kommen nur noch in den vergleichsweise seltenen Fällen einer hohen Leistungsanforderung oder eines Momenteneingriffs am jeweiligen Rad 14, 18 zum Einsatz. Die Verluste, die durch das elektrische Schleppmoment eines jeweils als permanenterregte Elektromaschine ausgebildeten als Boost-Motors 32 a, b und die Lagerverluste, welche in den Lagern des jeweiligen Rotors entstehen würden, entfallen. Grundsätzlich können durch den Einsatz von Axialflussmaschinen sehr hohe Leistungsdichten und Drehmomentdichten realisiert werden. Bei der Verwendung von fliehkraftaktivierten Freiläufen als Übertragungselemente 42, 44 sollten sich die Abtriebswellen bereits drehen beziehungsweise das Fahrzeug eine Mindestgeschwindigkeit haben oder sich im Beschleunigungsprozess befinden, da die fliehkraftaktivierten Klemmstücke erst ab einer bestimmten Drehzahl zur Anlage kommen und dann erst sperren können. Bei einer Beschleunigung aus dem Stillstand oder aus geringer Geschwindigkeit heraus sollte es keine auffällige Zuschaltung der Boost-Motoren 32 a, b geben. Bei Verwendung von Schaltelementen als Übertragungselemente 42, 44 und konventionellen Freiläufen mit ständig anliegenden Klemmkörpern existieren diese Einschränkungen nicht.

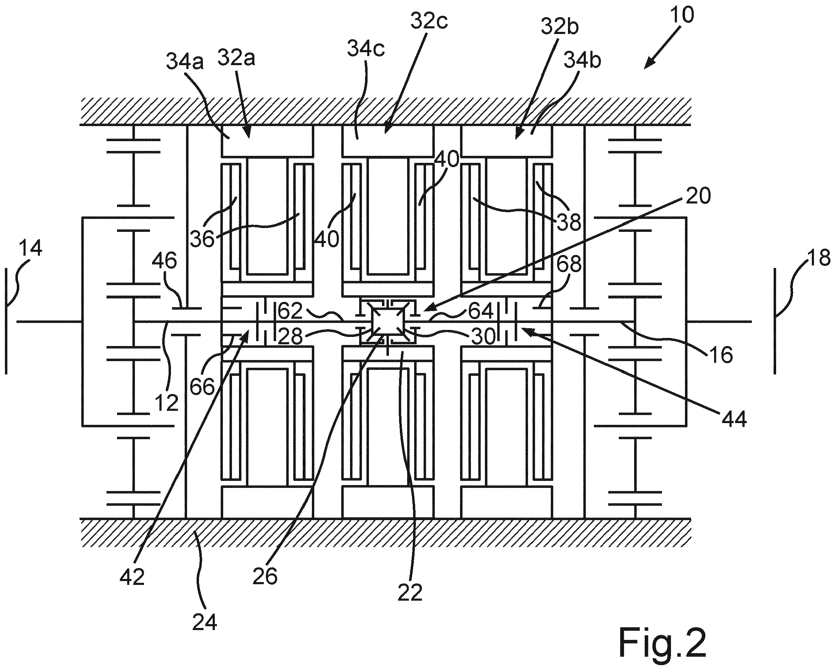

Fig. 2 zeigt in einer schematischen Darstellung eine zweite Ausführungsform der Antriebseinrichtung 10. Dabei weist das Differentialgetriebe 20 insbesondere zusätzlich zu den Abtriebswellen 12 und 16 vorgesehene Differentialwellen 62 und 64 auf, die koaxial zueinander und koaxial zu den Abtriebswellen 12 und 16 angeordnet sind. Dabei ist das Abtriebsrad 28 drehfest mit der Differentialwelle 62 und das Abtriebsrad 30 drehfest mit der Differentialwelle 64 verbunden. Über das Übertragungselement 42 sind die Rotoren 36 und über diese die Abtriebswelle 12 von der Differentialwelle 62 und somit von der Axialflussmaschine 32c antreibbar, sodass die Axialflussmaschine 32c über das Differentialgetriebe 20 die Rotoren 36 und über diese die Abtriebswelle 12 antreiben kann. Über das Übertragungselement 44 kann die Differentialwelle 64 die Rotoren 38 und über diese die Abtriebswelle 16 antreiben, sodass die Axialflussmaschine 32c über das Differentialgetriebe 20 die Rotoren 38 und über diese die Abtriebswelle 16 antreiben kann. Lager für die Differentialwellen 62 und 64 sind mit 66 und 68 bezeichnet. Das jeweilige Übertragungselement 42, 44 kann beispielsweise ein Freilauf oder ein insbesondere aktuierbares Schaltelement wie beispielsweise ein reibschlüssiges Schaltelement oder ein formschlüssiges Schaltelement sein. Beispielsweise sind dabei die Axialflussmaschinen 32a und 32b als Effizienzmotoren oder Effizienzmaschinen ausgebildet, wobei insbesondere die Axialflussmaschine 32c als ein Boost-Motor, das heißt als eine Boost-Maschine ausgebildet ist. Insbesondere sind die Axialflussmaschinen 32a und 32b elektrische Maschinen mit relativ niedriger Leistung und Drehmoment, wobei die Axialflussmaschinen 32a und 32b permanent an die Fahrzeugräder 14 und 18 angebunden sind. Der Boost-Motor 32c schaltet sich beispielsweise bei Vorwärtsfahrt über das jeweilige Übertragungselement 42, 44 über die jeweilige Differentialwelle 62, 64 auf den Abtrieb zu. Das jeweilige Übertragungselement 42, 44 ist beispielsweise jeweils ein fliehkraftaktivierter Freilauf, in welchem durch eine Klemmstückabhebung kein Anliegen der Klemmkörper bei inaktiven Boost-Motor 32c vorliegt, und somit keine zusätzlichen Schleppverluste und Verschleiß am Freilauf erzeugt werden. Optional kann die Axialflussmaschine 32c als Leistungsmaschine ausgebildet sein, insbesondere mit maximalen Leistungsanforderungen. Radindividuelles Antriebs-Drehmoment und Brems-Drehmoment der beiden Effizienzmaschinen 32a, b liegt sofort an. Die Leistungsmaschine 32c hat geringe Zuschaltzeiten, da kein aktives Schaltelement betätigt wird und keine Synchronisierung eines Schaltelements erforderlich ist, wenn die Übertragungselemente 42 und 44 vorteilhaft als Freiläufe ausgebildet sind. Auch bei einseitigem Schlupf ist vorteilhaft ein hohes Drehmoment am gegenüberliegenden nicht-schlupfenden Rad darstellbar, insbesondere ein maximales Drehmoment der jeweiligen Effizienzmaschine 32a, b zuzüglich eines halben verfügbaren Drehmoments der Leistungsmaschine 32c, wobei bei Bedarf zusätzlich die jeweilige Effizienzmaschine 32a, b einer schlupfenden Seite abstützt oder bremst. Drehmomentanforderungen, Leistungsanforderungen und Höchstgeschwindigkeitsanforderungen sind so vorteilhaft mit der Ausführungsform der Erfindung aus Fig. 2 mit nur einem Gang darstellbar. Die Abkoppelbarkeit des Boost-Motors zugunsten der Höchstgeschwindigkeit ist so vorteilhaft mit der Ausführungsform der Erfindung aus Fig. 2 auch mit als Freilauf ausgeführten Übertragungselementen 42, 44 möglich, falls die maximale Drehzahl der Effizienzmaschine höher als die maximale Drehzahl des Boost-Motors ist. Die Höchstgeschwindigkeit wird in dieser Betriebssituation nur mit den beiden Effizienzmaschinen gefahren, da der Boost-Motor ausgekoppelt bleibt. Insbesondere an einer Hinterachse sind somit besonders hohe Leistungen realisierbar.

Ferner ist es denkbar, dass die Axialflussmaschine 32c als Effizienzmaschine mit relativ niedriger Leistung und Drehmoment ausgebildet ist und, insbesondere, wie bei der ersten Ausführungsform der Erfindung aus Fig. 1, über das Differential permanent an die Fahrzeugräder 14 und 18 angebunden ist. Dabei sind beispielsweise die Axialflussmaschinen 32a und 32b als Boost-Motoren ausgebildet, die sich bei Vorwärtsfahrt über das jeweilige Übertragungselement 42, 44, welches insbesondere als Fliehkraftfreilauf ausgebildet ist, je Abtriebswelle 12, 16 zu oder abschalten können, da kein Anliegen der Klemmkörper bei inaktivierten Boost-Motoren 32a, b und somit keine zusätzlichen Schleppverluste und Verschleiß am Freilauf, wirken. Radindividuelles Antriebsdrehmoment der beiden Boost-Motoren 32a und 32b liegen schnell an. Radindividuelles Brems-Drehmoment kann bei Verwendung von Freiläufen als Übertragungselemente 42, 44 mit den beiden Boost-Motoren 32a, b) nicht direkt erzeugt werden, jedoch ist dies indirekt möglich. Die zentrale Axialflussmaschine 32c stellt beispielsweise das Soll-Bremsmoment. Der Boost-Motor 32 a oder b der Radseite, welche noch Antriebsmoment benötigt, addiert das erforderliche zusätzliche Drehmoment, um auf das Anforderungsdrehmoment am Rad zu kommen. Die Boost-Motoren 32a, b haben geringe Zuschaltzeiten, da kein aktives Schaltelement betätigt wird und keine Synchronisierung eines Schaltelements erforderlich ist. Drehmoment-, Leistungs- und Höchstgeschwindigkeitsanforderungen sind so vorteilhaft auch mit dieser Ausgestaltung der Ausführungsform der Erfindung mit einem Gang darstellbar. Eine Abschaltbarkeit der Boost-Motoren zugunsten der Höchstgeschwindigkeit ist möglich.

### Bezugszeichenliste

- 10: Antriebseinrichtung
- 12: Abtriebswelle
- 14: Fahrzeugrad
- 16: Abtriebswelle
- 18: Fahrzeugrad
- 20: Differentialgetriebe
- 22: Differentialkorb
- 24: Gehäuse
- 26: Ausgleichsrad
- 28: Abtriebsrad
- 30: Abtriebsrad
- 32a-c: Axialflussmaschine
- 34a-c: Stator
- 36: Rotor
- 38: Rotor
- 40: Rotor
- 42: Übertragungselement
- 44: Übertragungselement
- 46: Lager
- 48: Lager
- 50: Planetenradsatz
- 52: Planetenradsatz
- 54: Sonnenrad
- 56: Planetenträger
- 58: Hohlrad
- 60: Planetenrad
- 62: Differentialwelle
- 64: Differentialwelle
- 66: Lager
- 68: Lager

## Patentansprüche

1. Antriebseinrichtung (10) für einen Kraftwagen, mit:
- einer ersten Abtriebswelle (12), über welche ein erstes Fahrzeugrad (14) einer Fahrzeugsachse des Kraftwagens antreibbar ist,
- einer koaxial zur ersten Abtriebswelle (12) angeordneten, zweiten Abtriebswelle (16), über welche ein zweites Fahrzeugrad (18) der Fahrzeugsachse des Kraftwagens antreibbar ist,
- einem Differentialgetriebe (20), über welches die Abtriebswellen (12, 16) antreibbar sind, und
- drei koaxial zueinander und koaxial zu den Abtriebswellen angeordneten Axialflussmaschinen (32a-c), nämlich:
∘ einer ersten Axialflussmaschine (32a), mittels welcher die erste Abtriebswelle (12) unter Umgehung des Differentialgetriebes (20) antreibbar ist,
∘ einer zweiten Axialflussmaschine (32b), mittels welcher die zweite Abtriebswelle (16) unter Umgehung des Differentialgetriebes (20) antreibbar ist, und
∘ einer in axialer Richtung der Axialflussmaschinen (32a-c) zwischen der ersten Axialflussmaschine (32a) und der zweiten Axialflussmaschine (32b) angeordneten, dritten Axialflussmaschine (32c), mittels welcher die Abtriebswellen (12, 16) über das Differentialgetriebe (20) antreibbar sind.

2. Antriebseinrichtung (10) nach Anspruch 1,
**gekennzeichnet durch**:
- Ein als ersten Freilauf ausgebildetes erstes Schaltelement (42), über welches die erste Abtriebswelle (12) von der ersten Axialflussmaschine (32a) unter Umgehung des Differentialgetriebes (20) antreibbar ist, und
- Ein als zweiten Freilauf (44) ausgebildetes zweites Schaltelement (44), über welches die zweite Abtriebswelle (16) von der zweiten Axialflussmaschine (32b) unter Umgehung des Differentialgetriebes (20) antreibbar ist.

3. Antriebseinrichtung (10) nach Anspruch 1,
**gekennzeichnet durch**:
- Ein als erstes, reibschlüssiges oder formschlüssiges Schaltelement ausgebildetes erstes Schaltelement (42), mittels welchem die erste Abtriebswelle (12) von der ersten Axialflussmaschine (32a) unter Umgehung des Differentialgetriebes (20) antreibbar ist, und
- Ein als zweites, reibschlüssiges oder formschlüssiges Schaltelement ausgebildetes zweites Schaltelement (44), mittels welchem die zweite Abtriebswelle (16) von der zweiten Axialflussmaschine (32b) unter Umgehung des Differentialgetriebes (20) antreibbar ist.

4. Antriebseinrichtung (10) nach Anspruch 1,
**gekennzeichnet durch**:
- Ein als ersten Freilauf ausgebildetes erstes Schaltelement (42), über welches die erste Abtriebswelle (12) von der dritten Axialflussmaschine (32c) unter Einbeziehung des Differentialgetriebes (20) antreibbar ist, und
- Ein als zweiten Freilauf ausgebildetes zweites Schaltelement (44), über welches die zweite Abtriebswelle (16) von der dritten Axialflussmaschine (32c) unter Einbeziehung des Differentialgetriebes (20) antreibbar ist.

5. Antriebseinrichtung (10) nach Anspruch 1,
**gekennzeichnet durch**:
- Ein als erstes, reibschlüssiges oder formschlüssiges Schaltelement ausgebildetes erstes Schaltelement (42), mittels welchem die erste Abtriebswelle (12) von der dritten Axialflussmaschine (32c) unter Einbeziehung des Differentialgetriebes (20) antreibbar ist, und
- Ein als zweites, reibschlüssiges oder formschlüssiges Schaltelement ausgebildetes zweites Schaltelement (44), mittels welchem die zweite Abtriebswelle (16) von der dritten Axialflussmaschine (32c) unter Einbeziehung des Differentialgetriebes (20) antreibbar ist.

## Claims

1. Drive apparatus (10) for a motor vehicle, comprising:
- a first output shaft (12) via which a first vehicle wheel (14) of a vehicle axle of the motor vehicle can be driven,
- a second output shaft (16) which is arranged coaxially to the first output shaft (12), and via which a second vehicle wheel (18) of the vehicle axle of the motor vehicle can be driven,
- a differential gear (20) via which the output shafts (12, 16) can be driven, and
- three axial flow machines (32a-c) arranged coaxially to one another and coaxially to the output shafts, namely:
∘ a first axial flow machine (32a), by means of which the first output shaft (12) can be driven with bypassing of the differential gear (20),
∘ a second axial flow machine (32b), by means of which the second output shaft (16) can be driven with bypassing of the differential gear (20), and
∘ a third axial flow machine (32c) which is arranged between the first axial flow machine (32a) and the second axial flow machine (32b) in the axial direction of the axial flow machines (32a-c), and by means of which the output shafts (12, 16) can be driven via the differential gear (20).

2. Drive apparatus (10) according to claim 1,
**characterized by:**
- a first switching element (42) which is designed as a first freewheel, and via which the first output shaft (12) can be driven by the first axial flow machine (32a) with bypassing of the differential gear (20), and
- a second switching element (44) which is designed as a second freewheel (44), and via which the second output shaft (16) can be driven by the second axial flow machine (32b) with bypassing of the differential gear (20).

3. Drive apparatus (10) according to claim 1,
**characterized by:**
- a first switching element (42) which is designed as a first frictional or form-fitting switching element, and by means of which the first output shaft (12) can be driven by the first axial flow machine (32a) with bypassing of the differential gear (20), and
- a second switching element (44) which is designed as a second frictional or form-fitting switching element, and by means of which the second output shaft (16) can be driven by the second axial flow machine (32b) with bypassing of the differential gear (20).

4. Drive apparatus (10) according to claim 1,
**characterized by:**
- a first switching element (42) which is designed as a first freewheel, and via which the first output shaft (12) can be driven by the third axial flow machine (32c) with involvement of the differential gear (20), and
- a second switching element (44) which is designed as a second freewheel, and via which the second output shaft (16) can be driven by the third axial flow machine (32c) with involvement of the differential gear (20).

5. Drive apparatus (10) according to claim 1,
**characterized by:**
- a first switching element (42) which is designed as a first frictional or form-fitting switching element, and by means of which the first output shaft (12) can be driven by the third axial flow machine (32c) with involvement of the differential gear (20), and
- a second switching element (44) which is designed as a second frictional or form-fitting switching element, and by means of which the second output shaft (16) can be driven by the third axial flow machine (32c) with involvement of the differential gear (20).

## Revendications

1. Dispositif d'entraînement (10) pour un véhicule automobile, comportant :
- un premier arbre de sortie (12) par l'intermédiaire duquel une première roue de véhicule (14) d'un essieu de véhicule du véhicule automobile peut être entraînée,
- un second arbre de sortie (16) disposé de manière coaxiale par rapport au premier arbre de sortie (12) par l'intermédiaire duquel une seconde roue de véhicule (18) de l'essieu de véhicule du véhicule automobile peut être entraînée,
- un engrenage différentiel (20) par l'intermédiaire duquel les arbres de sortie (12, 16) peuvent être entraînés, et
- trois machines à flux axial (32a-c) disposées de manière coaxiale les unes par rapport aux autres et de manière coaxiale par rapport aux arbres de sortie, à savoir :
∘ une première machine à flux axial (32a) au moyen de laquelle le premier arbre de sortie (12) peut être entraîné en contournant l'engrenage différentiel (20),
∘ une deuxième machine à flux axial (32b) au moyen de laquelle le second arbre de sortie (16) peut être entraîné en contournant l'engrenage différentiel (20), et
∘ une troisième machine à flux axial (32c) disposée dans la direction axiale des machines à flux axial (32a-c), entre la première machine à flux axial (32a) et la deuxième machine à flux axial (32b), au moyen de laquelle les arbres de sortie (12, 16) peuvent être entraînés par l'intermédiaire de l'engrenage différentiel (20).

2. Dispositif d'entraînement (10) selon la revendication 1,
**caractérisé par** :
- un premier élément de commutation (42) réalisé sous forme de première roue libre par l'intermédiaire de laquelle le premier arbre de sortie (12) peut être entraîné par la première machine à flux axial (32a) en contournant l'engrenage différentiel (20), et
- un second élément de commutation (44) réalisé sous forme de seconde roue libre (44) par l'intermédiaire de laquelle le second arbre de sortie (16) peut être entraîné par la deuxième machine à flux axial (32b) en contournant l'engrenage différentiel (20).

3. Dispositif d'entraînement (10) selon la revendication 1,
**caractérisé par** :
- un premier élément de commutation (42) réalisé sous forme de premier élément de commutation à liaison par friction ou par complémentarité de forme au moyen duquel le premier arbre de sortie (12) peut être entraîné par la première machine à flux axial (32a) en contournant l'engrenage différentiel (20), et
- un second élément de commutation (44) réalisé sous forme de second élément de commutation à liaison par friction ou par complémentarité de forme au moyen duquel le second arbre de sortie (16) peut être entraîné par la deuxième machine à flux axial (32b) en contournant l'engrenage différentiel (20).

4. Dispositif d'entraînement (10) selon la revendication 1,
**caractérisé par** :
- un premier élément de commutation (42) réalisé sous forme de première roue libre par l'intermédiaire de laquelle le premier arbre de sortie (12) peut être entraîné par la troisième machine à flux axial (32c) en intégrant l'engrenage différentiel (20), et
- un second élément de commutation (44) réalisé sous forme de seconde roue libre par l'intermédiaire de laquelle le second arbre de sortie (16) peut être entraîné par la troisième machine à flux axial (32c) en intégrant l'engrenage différentiel (20).

5. Dispositif d'entraînement (10) selon la revendication 1,
**caractérisé par** :
- un premier élément de commutation (42) réalisé sous forme de premier élément de commutation à liaison par friction ou par complémentarité de forme au moyen duquel le premier arbre de sortie (12) peut être entraîné par la troisième machine à flux axial (32c) en intégrant l'engrenage différentiel (20), et
- un second élément de commutation (44) réalisé sous forme de second élément de commutation à liaison par friction ou par complémentarité de forme au moyen duquel le second arbre de sortie (16) peut être entraîné par la troisième machine à flux axial (32c) en intégrant l'engrenage différentiel (20).
